# EUROPEAN PATENT APPLICATION

(11) **EP 1 254 823 A1**
(43) Date of publication of application: **06.11.2002**
(21) Application number: 02076719.0
(22) Date of filing: 29.04.2002
(51) Int. Cl.: B62B 3/18

(54) **Trolley, for instance a rolling container or shopping trolley**

(30) Priority: 01.05.2001 NL 1017975
(71) Applicant: Hoza B.V., 9679 TC Scheemda (NL)
(72) Inventor: Cazemier, Anno Jan, 9231 JB Surhuisterveen (NL); Langhout, Augustinus, 8447 EG Heerenveen (NL)
(74) Representative: Prins, Adrianus Willem

(57) **Abstract**

A trolley, in particular a rolling container or a shopping trolley, with at least one panel (4) substantially formed from lattice work (3) and a vibration damping element (11), the vibration damping element (11) being designed as an elongated flexible element (11) which, in assembled condition, is connected to the lattice work (3), for instance by weaving the element into the lattice work, and a method for providing a vibration damping element in a trolley by weaving an elongated vibration damping element onto a lattice work of the trolley.

## Description

The invention relates to a trolley, having at least one panel formed substantially from lattice work and a vibration damping element.

Generally, shopping trolleys and rolling containers are manufactured from metal wire formed into lattice work. When using such trolleys, the lattice work starts vibrating, which is accompanied by production of sound. This sound has a large range and is very unpleasant to hear. Long-term exposure to the produced sound can impair the sense of hearing. Accordingly, both to the person rolling the trolley and people present in the surroundings, this sound is experienced as a problem. As such trolleys are often used in and around a supermarket, people living in the neighborhood are greatly bothered by the use of such trolleys.

From the European patent applications EP 587108 and EP 364873, a trolley is known which produces less sound when used. In these applications, a trolley is shown which is built up from panels of lattice work. Some of these panels are mutually connected by means of a plastic connecting element. The connecting element damps the relative movement of the respective panels so that the shopping trolley, in use, produces less sound.

Although with this trolley a reduction in sound production is obtained, this solution has a number of drawbacks. For instance, the vibration damping element of the known shopping trolley needs to have a carefully prescribed shape and predetermined dimensions which are customized to the placement of the vibration damping element at the pre-identified position in the shopping trolley. This renders manufacture of the vibration damping element and the production of the shopping trolley relatively expensive. Additionally, the solution offered is not suitable for adaptation of already existing shopping trolleys.

The object of the invention is to provide a trolley, such as, for instance, a rolling container or shopping trolley, which, during use, produces little sound and can simply be manufactured with limited costs.

To this end, the invention provides a trolley according to claim 1. What is achieved by arranging an elongated, vibration damping element in the lattice work of the trolley is that in use, vibrations which are developed in the trolley are damped and the production of noise decreases accordingly. As the element is elongated, the vibration damping element can be disposed in use such, that it is in contact with the lattice work at multiple positions and thus damps and suppresses sound-transmitting vibrations at various positions in the lattice work. The vibration damping element can have dimensions which allow the weaving into a lattice work with relatively large openings and the weaving into a lattice work with relatively small openings. As the openings in the lattice work in such trolleys are substantially identical because the products to be transported have substantially identical dimensions and the requirements with regard to the visibility of the goods when looking through the lattice work are substantially identical, a vibration damping element with suitably selected dimensions can be universally applicable. The construction of the trolley, in particular the specific connections between the panel formed from lattice work and any other part of the trolley, is of no importance for the dimensions of the vibration damping element. As a consequence, the vibration damping element can be manufactured inexpensively and, furthermore, can be designed to be universally applicable. As a result, a vibration damping element can, for instance, be temporarily taken from a trolley to be used in combination with another trolley of a different type. Consequently, an owner of a number of trolleys does not necessarily has to have the same number of vibration damping elements, but a more limited number of vibration damping elements will suffice. Additionally, the vibration damping elements can be reused after disassembly.

An additional advantage is that the sound transmitting vibrations in the lattice work are damped independently of the location where the acoustic vibrations in the lattice work are generated. For instance, acoustic vibrations caused by trolleys bumping into each other, acoustic vibrations caused by a bottle rolling around in the trolley and acoustic vibrations caused by play in a connection between a panel formed from lattice work and a different part of the shopping trolley are all suppressed by the vibration damping element woven into the lattice work.

The vibration damping element can be provided on the lattice work in a simple manner by weaving the element into the lattice work. Such a manner of mounting the element is simple and yields a good contact between the element and the lattice work. By mounting the vibration damping element in an elastically stretched manner the advantage is achieved that the sound-transmitting vibrations in the lattice work are damped even better by the mechanical tension exerted on the lattice work. Furthermore, the remaining acoustic vibrations can be further absorbed and damped in the elastically stretched vibration damping element.

What is achieved by giving the vibration damping element a substantially strip-shaped design is that the vibration damping element can be woven into the lattice work in a simple manner.

Further, the vibration damping element can be provided with connecting means for connecting the vibration damping element to the lattice work or a different part of the goods transporting means. This offers the advantage that the vibration damping element can be elastically stretched in a simple manner.

The invention further relates to a vibration damping element for use in a device according to the invention, and a method for fitting a vibration damping element in a trolley.

Further elaborated embodiments of the invention are described in the dependent claims. Further aspects, effects, advantages and details of the invention will be elucidated in the following on the basis of an exemplary embodiment of the invention, while reference is made to the drawing.

In the drawing:
Fig. 1 shows a first embodiment of a shopping trolley according to the invention;
Fig. 2 shows a second embodiment of a shopping trolley according to the invention; and
Fig. 3 shows an embodiment of a vibration damping element according to the invention.

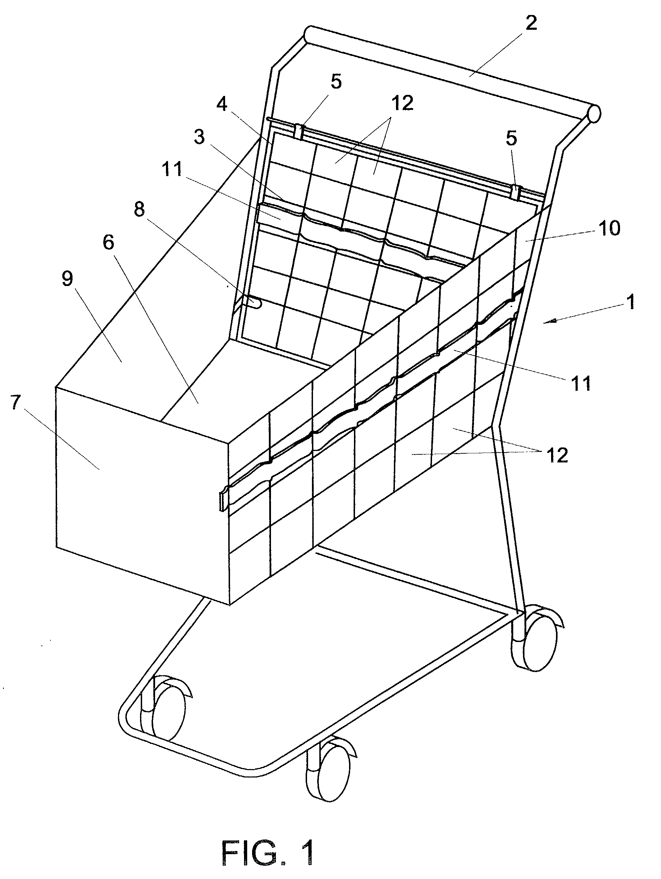

In Fig. 1 an example of a trolley according to the invention is shown in the form of a shopping trolley 1 which, in use, can be rolled by hand by pushing push-bar 2. The shopping trolley 1 is provided with a panel 4 formed from lattice work 3 which, by means of hinging connections 5, is fitted onto the shopping trolley 1. The panel 4 can be pushed upwards in the direction of the goods space 6 for allowing a front side 7 of another empty shopping trolley (not shown), not to be used, to be partly parked in a manner known per se in the shopping trolley 1. The panel 4 has freedom of movement for vibration and for bumping against the support point 8. As a result, in the panel 4, acoustic vibrations can be formed which are unpleasant to hear. Also in the panel 9, also formed from lattice work 3 (not shown) and in panel 10, formed from lattice work 3, through the bumping of the panel 4 against the support point 8, acoustic vibrations can be formed which are unpleasant to hear.

Into the lattice work 3 of panel 4 and panel 10, an elongated vibration damping element 11 has been woven. The embodiment of the vibration damping element 11 shown in Fig. 1 is of a strip-shaped design. The vibration damping element 11 is sufficiently flexible to be woven into the lattice work 3 and has dimensions which allow the vibration damping element 11 to fit through the openings 12 in the lattice work. The vibration damping element 11 is sufficiently long to be in contact with the lattice work 3 at multiple positions and thus to damp sound transmitting vibrations at various positions in the lattice work 3.

Preferably, the vibration damping element 11 is slightly elastically stretched, so that, in mounted condition, it is under tensile stress. The vibration damping element 11 can also be designed as a string to tie the vibration damping element 11 to parts of the lattice work in a simple manner. The vibration damping element 11 can be manufactured from any material suitable to that end, and preferably from plastic or rubber. Rubber and polyurethane are particularly advantageous because this is relatively inexpensive, flexible and recyclable material which is resistant to the conditions of use. Furthermore, this material has sufficiently high density to obtain, at the desired dimensions, a mass which is sufficiently large to be able to damp the vibrations. The element 11 can, for that matter, also be manufactured from different materials, for instance by a combination of an elastic material with a material having good damping properties.

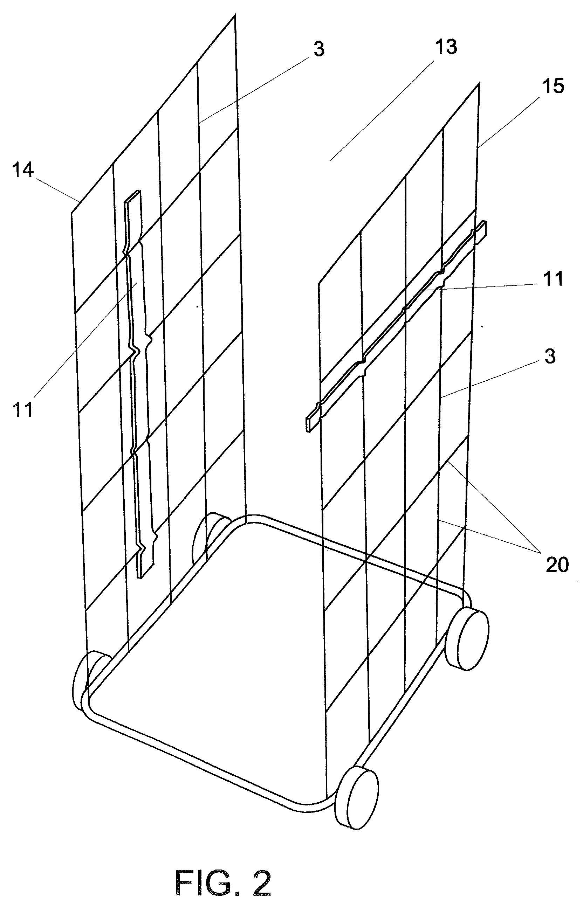

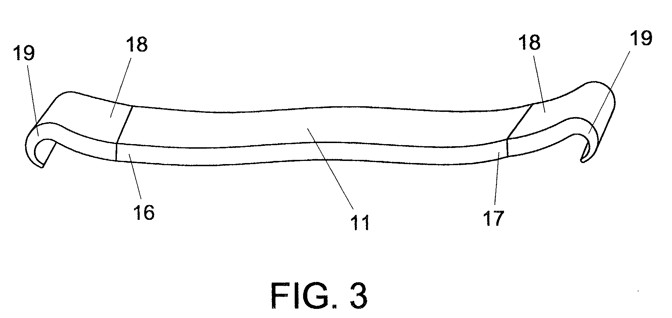

The use of the vibration damping element 11 is not limited to shopping trolleys. As shown in Fig. 2, such a vibration damping element 11 can also be used in other trolleys, such as, for instance, a rolling container 13. Rolling a rolling container 13, which sometimes takes place early in the morning for supplying new merchandise from a truck into the depot of a supermarket, can be accompanied by unpleasant sound production by the vibrations in the lattice work 3 of the panels 14 and 15. These vibrations can be generated by the goods which, during wheeling, bump against the panels 14, 15. As already noted hereinabove, the production of sound is a source of irritation. The use of the vibration damping elements 11 in a manner as, for instance, shown in Fig. 2, damps the acoustic vibrations in the lattice work 3. This effect is also important in view of the regulations developed in the framework of the Nuisance Act and the Working Conditions Act. Finally, in Fig. 3, a vibration damping element 11 is shown which is provided both at the first extremity 16 and at the second extremity 17 with connecting means 18, which are arranged for connecting the vibration damping element 11 to the lattice work 3 or a different part of the rolling container. In the example shown in Fig. 3, the connecting means 18 comprise hooks 19 which, for instance, can be hooked around bars 20 in the lattice work 3. Naturally, these means 18 can also be arranged for connecting the first extremity 16 to the second extremity 17 so that the vibration damping element 11, closed in itself and woven into the lattice work, can be fitted on a panel 3, 10, 14 15. Such means 18 can for instance comprise a snap connection, Velcro tape or a combination of a hook and an eye.

The invention is not limited in any way to the exemplary embodiments shown. For instance, the vibration damping element 11 can be woven into the lattice work 3 in various manners. The vibration damping element 11 can be woven into the lattice work 3 substantially in horizontal direction or substantially in vertical direction and even substantially in diagonal direction. It can also occur that the vibration damping element 11 is woven into the lattice work 3 in various directions. What is meant in this context by woven into the lattice work is also the tying around the bars 20 and, in this manner, interconnecting the separate bars 20 with the vibration damping element 11. Also, a few consecutive bars 20 can be skipped. Also, during the weaving of the vibration damping element 11 into the lattice work, a few adjacent openings can be skipped. The vibration damping element 11 can be provided with a smooth or a ribbed surface so as to have a good contact with the bars 20 or not to slip along the bars 20. The presence of connecting means 18 will in this case determine the preference. The vibration damping element 11 can also be partly string-shaped and partly strip-shaped. Preferably, the vibration damping element 11 is made of rubber. This can be natural rubber but also the much cheaper synthetic rubber. However, for the manufacture of the vibration damping element 11, the invention does not exclude the use of, for instance, soft resilient wood. Also, rope or a strip, pre-woven with the aid of rope can be used for the manufacture of the vibration damping element 11. The vibration damping element 11 can further be provided with fluorescent elements to increase the visibility of the trolley, especially in the dark. Also, a special meaning can be attached to the use of colors, such as, for instance, the ownership of the vibration damping element 11 or trolley. Such variants are all understood to fall within the scope of the invention.

Although in the two exemplary embodiments shown a trolley is shown in the form of a shopping trolley and a rolling container, the invention is not limited to these examples. What is meant by a trolley according to the invention is any trolley comprising a container with at least one panel formed from lattice work. A trolley is particularly understood to mean a pallet-box manufactured from gauze and other holders manufactured at least partly from lattice work that are transported. The vibrations in the lattice work of the holder of the trolley occurring during transport are then suppressed by the vibration damper according to the invention in the manner as described hereinabove.

## Claims

1. A trolley, with at least one panel (4, 14, 15) formed substantially from lattice work (3) and a vibration damping element, **characterized in that** the vibration damping element is designed as an elongated flexible element (11) which, in assembled condition, is connected to the lattice work (3).

2. A device according to claim 1, **characterized in that** the flexible element, in assembled condition, is woven into the lattice work(3).

3. A device according to claim 1 or 2, **characterized in that** the vibration damping element (11) can be elastically stretched.

4. A device according to any one of the preceding claims, **characterized in that** the vibration damping element (11) is of substantially strip-shaped design.

5. A device according to any one of claims 1 - 3, **characterized in that** the vibration damping element (11) is substantially of string-shaped design.

6. A device according to any one of the preceding claims, **characterized in that** the vibration damping element (11) is substantially manufactured from a plastic.

7. A device according to any one of the preceding claims, **characterized in that** the vibration damping element (11) is substantially manufactured from a type of rubber.

8. A device according to any one of the preceding claims, **characterized in that** the vibration damping element (11) is provided with means (18, 19) which are arranged to connect a first extremity of the vibration damping element to a second extremity of the vibration damping element.

9. A device according to any one of the preceding claims, **characterized in that** the vibration damping element (11) is provided with connecting means with which the vibration damping element (11) can be connected to the lattice work or a different part of the trolley (1, 13).

10. A device according to any one of the preceding claims, **characterized in that** the trolley comprises a shopping trolley.

11. A device according to any one of claims 1-9, **characterized in that** the trolley comprises a rolling container.

12. A device according to any one of claims 1-9, **characterized in that** the trolley comprises a gauze pallet box.

13. A vibration damping element for use in a device according to any one of the preceding claims.

14. A method for fitting a vibration damping element (11) in a trolley (1, 13), **characterized by** weaving an elongated vibration damping element (11) into the lattice work (3) of the trolley (1, 13).
